# EUROPEAN PATENT APPLICATION

(11) **EP 2 236 702 A1**
(43) Date of publication of application: **06.10.2010**
(21) Application number: 09004915.6
(22) Date of filing: 02.04.2009
(51) Int. Cl.: E04H 6/04, E04H 15/38

(54) **Mobile garage having a side door**

(71) Applicant: Sportsman Corporation Co., Tu Cheng Industrial Park Taipei Shien (TW)
(72) Inventor: Chen, Jack, Taipei Shien (TW)
(74) Representative: Becker Kurig Straus

(57) **Abstract**

A mobile garage (1) having a side door (51) comprises a base (2) having a front frame assembly (3) connected to the front end of the base and a rear frame assembly (4) connected to the rear end of the base, wherein a horizontal distance (W) is formed between the rear end of the front frame assembly (3) and the front end of the rear frame assembly (4), and a canopy (5) having a side door (51) corresponding to the horizontal distance (W) at one side of the canopy (5) is carried on the front frame assembly (3) and the rear frame assembly (4) such that an opening door of an automobile swings outwardly through the horizontal distance (W) and the side door (5) for people to easily get in or get out of the automobile when the automobile is driven into the mobile garage (1).

## Description

### Field of the Invention

The present invention relates to a mobile garage, particularly, to a mobile garage having a canopy placed on the front frame assembly and the rear frame assembly. A side door is provided at one side of the canopy and the side door is arranged corresponding to the position between the front frame assembly and the rear frame assembly for easy pass.

### Background

Conventional automobile covers are covered directly onto various automobiles. In order to keep the covers from being blown away, some covers are provided with small holes near the bottom thereof, through which fasten belts or cords can be inserted and fastened to the tires or the bottom of automobiles. However, when automobiles are protected by covers and parked under burning sun, heat can still be transferred to automobiles because the space between automobiles and covers is not sufficient to prevent the heat transfer. Besides, covers may easily scratch the underneath automobiles in a windy environment. Moreover, in rainy days, it is difficult to use automobile covers right away after driving because the exhaust pipes are still hot.

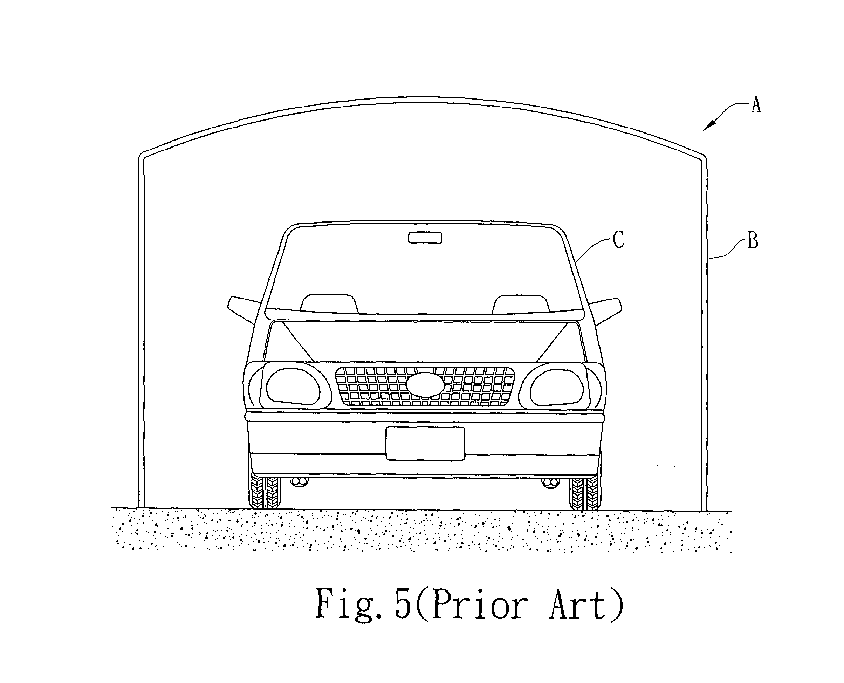

Accordingly, a collapsible garage is formed with a plurality of mental supports for easy collapsing and a canvas cover on those supports for forming a fixed shape garage to solve the problems of the conventional automobile covers. As shown in Figure 5, the span between both sides of the mental supports B of garage A should be much wider than the width of the automobile C so that drivers can easily get in and get out of the automobile C after parking. Furthermore, the wider-span mental supports can also protect the automobile doors from paint chips, dings, dents, scratches, and other damages when opening the doors carelessly. However, the mental supports B with a wider span will result in an increase in raw material cost and cause the following problems: (1) when retracting or extending the metal supports for use, it is very inconvenient and will cause damages on the automobiles surface if the metal supports cannot be simultaneously moved; (2) the metal supports with a wider span require more space; (3) the overall structural strength of the collapsible garage is reduced due to the wider span of the mental supports, it then needs to redesign the materials and structure respectively to maintain the same strength, cost is therefore increased.

In order to solve the abovedescribed problems, after hard research and development, a mobile garage that substantially departs from the conventional concepts and designs of the prior art is provided by the present invention, in so doing provides an apparatus primarily developed for the purpose of providing a mobile garage with sufficient structure strength and low material cost for people to easily get in and out of the automobiles with less space requirement.

### Summary of the Invention

The primary object of the present invention is to provide a mobile garage having a side door, wherein a space is formed between a front frame assembly and a rear frame assembly, and a canopy having a side door is placed on the front frame assembly and the rear frame assembly; an automobile door can be opened outwardly through the space and the side door so that a driver may get in and out of the automobile easily.

A secondary object of the present invention is to provide a mobile garage having a side door, wherein a canopy is carried on a plurality of movable supports which rotate about a base. Each movable support may be simultaneously pulled by a string to easily retract the movable supports and the canopy to provide easy use.

Another object of the present invention is to provide a mobile garage having a side door, wherein a tie beam having two parking curbs is transversely disposed between a first and a second side plates. The position of the tie beam relative to the base is adjustable such that the mobile garage is suitable for various automobiles with different lengths by guiding automobiles parking at predetermined positions.

In order to achieve the aforementioned objects, the mobile garage having a side door of the present invention comprises a base, a front frame assembly, a rear frame assembly and a canopy. The front frame assembly is connected to a front end of the base; the rear frame assembly is connected to a rear end of the base, and a horizontal distance is formed between the rear end of the front frame assembly and the front end of the rear frame assembly. The canopy is placed on top of the front frame assembly and the rear frame assembly, and a side door corresponding to the horizontal space is provided at one side of the canopy.

In an embodiment of the present invention, the rear frame assembly comprises a rear fixing support and a plurality of movable supports, and each movable support having a crossbar, and a first crutch and a second crutch that connect to one end of the crossbar respectively. The bottom ends of the first crutch and the second crutch are rotatably mounted to the first side plate and the second side plate respectively. A string having one end connected to the crossbar of a movable support is further disposed across the crossbars of other movable supports. Pulling the string can simultaneously pull and retract every movable support and the canopy on top of the movable supports.

In an preferred embodiment of the present invention, the base comprises a first side plate parallel to a second side plate, and a tie beam having two parking curbs is adjustably mounted between the first side plate and the second side plate.

Other objects, advantages and novel features of the present invention will become more apparent from the following detailed description when taken in conjunction with the accompanying drawings.

### Brief Description of the Drawings

FIG. 1 is a perspective view of a preferred embodiment showing a mobile garage having a side door according to the present invention.

FIG. 2 is a perspective view of a preferred embodiment showing the base connected with the front frame assembly and the rear frame assembly according to the present invention.

FIG. 3 is a perspective view of a preferred embodiment showing an automobile parked under the canopy of the mobile garage according to the present invention.

FIG. 4 is a perspective view of a preferred embodiment showing the movable supports pulled by the string for retraction according to the present invention.

FIG. 5 is a perspective view of a conventional garage showing an automobile parked inside the garage.

### Detailed Description

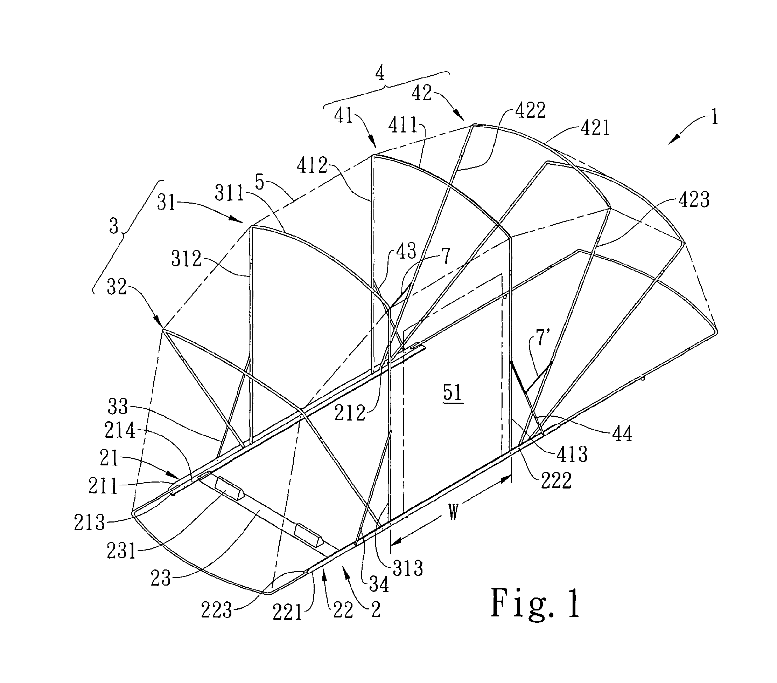

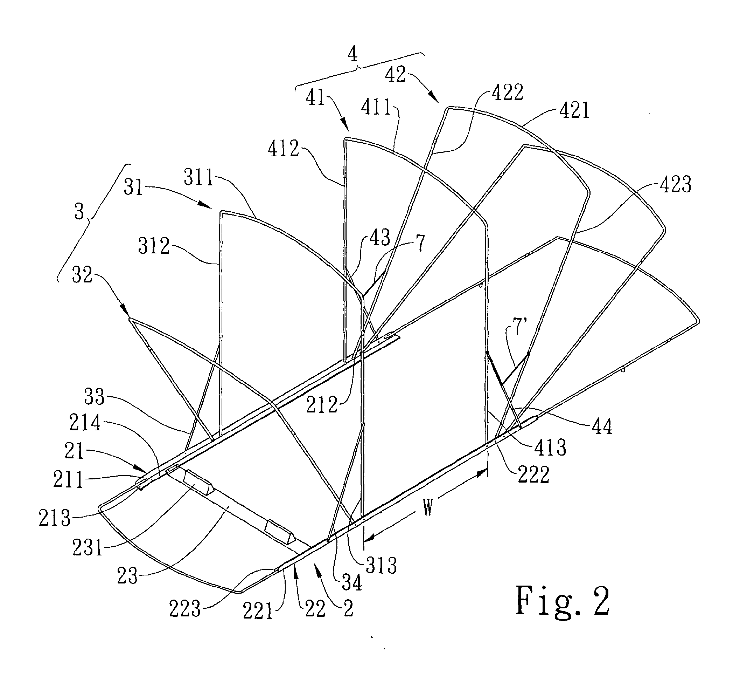

Referring to FIG. 1 and FIG. 2, a mobile garage 1 having a side door of a preferred embodiment of the present invention is illustrated, wherein the mobile garage 1 comprises a base 2, a front frame assembly 3, a rear frame assembly 4 and a canopy 5. The front frame assembly 3 and the rear frame assembly 4 are connected to the front end and the rear end of the base 2 respectively while the canopy 5 is placed oh top of the front frame assembly 3 and the rear frame assembly 4.

The base 2 comprises a first side plate 21, a second side plate 22 and a tie beam 23. The first and second side plates 21, 22 are two parallel longitudinal boards with L-shaped cross section. A perpendicular board 211 of the first side plate 21 is disposed with a plurality of first pivotal openings 212 at its rear end which are in a horizontal arrangement, and a perpendicular board 221 of the second side plate 22 is disposed with a plurality of second pivotal openings 222 corresponding to the first pivotal openings 212 while longitudinal boards 213 and 223 of the first and second side plates 21 and 22 are disposed with a plurality of corresponding screw holes 214 at the front end of the longitudinal boards 213, 223. The tie beam 23 is a flat board with two projected parking curbs 231 on the flat board, and both ends of the tie beam 23 are positioned and screwed to the screw holes 214 of the first and second side plates 21, 22 respectively. Both ends of the tie beam 23 when in use may be screwed to the screw holes 214 of various positions for adjusting the location of the tie beam 23 relative to the first and second side plates 21, 22.

The front frame assembly 3 comprises an inverted U-shaped front fixing support 31 and two inverted U-shaped positioning frames 32, wherein the front fixing support 31 has a front crossbar 311, a left front crutch 312 and a right front crutch 313 positioned parallel to the left front crutch 312. The left front crutch 312 and the right front crutch 313 are connected to one end of the front crossbar 311 respectively. The bottom ends of the left front crutch 312 and the right front crutch 313 are mounted to the first side plate 21 and the second side plate 22 respectively. Further, a front support crutch 33 and another front support crutch 34 are used for fixing the left and right front crutches 312, 313 perpendicularly onto the front ends of the first and second side plates 21, 22 respectively. The top end of the front support crutch 33 is connected to the left front crutch 312 while the bottom end of the front support crutch 33 is mounted to the perpendicular board 211 of the first side plate 21, and the top end of the front support crutch 34 is connected to the right front crutch 313 while the bottom end of the front support crutch 34 is mounted to the perpendicular board 221 of the second side plate 22.

The rear frame assembly 4 comprises an inverted U-shaped rear fixing support 41 and three inverted U-shaped movable supports 42, wherein the rear fixing support 41 has a rear crossbar 411, a left rear crutch 412 and a right rear crutch 413. The left rear crutch 412 and the right rear crutch 413 are connected to one end of the rear crossbar 411 respectively in which bottom ends of the left rear crutch 412 and the right rear crutch 413 are mounted to the first side plate 21 and the second side plate 22 respectively. Further, a rear support crutch 43 and another rear support crutch 44 are used for fixing the left and right rear crutches 412 and 413 perpendicularly onto the rear ends of the first and second side plates 21, 22 respectively. The top end of the rear support crutch 43 is connected to the left rear crutch 412 while the bottom end of the rear support crutch 43 is mounted to the perpendicular board 211 of the first side plate 21, and the top end of the rear support crutch 44 is connected to the right rear crutch 413 while the bottom end of the rear support crutch 44 is mounted to the perpendicular board 221 of the second side plate 22.

As the bottom ends of the left and right rear crutches 412 and 413 are mounted to the rear ends of the first and the second side plates 21, 22 respectively, the bottom ends of the left and right front crutches 312, 313 are mounted to the front ends of the first and second side plates 21, 22 respectively, a horizontal distance W is formed between the left rear crutch 412 and the left front crutch 312 and between the right rear crutch 413 and the right front crutch 313 respectively. Each inverted U-shaped movable support 42 includes a crossbar 421, a first crutch 422 and a second crutch 423. The first crutch 422 and the second crutch 423 are connected to one end of the crossbar 421 respectively. The bottom ends of the first crutch 422 and the second crutch 423 are pivotally mounted to the first pivotal openings 212 and the second pivotal openings 222 so that the crutches 422, 423 can move and turn relative to the first and second side plates 21, 22 of the base 2 respectively. Additionally, two torsion springs 7 and 7' are mounted to the two rear support crutches 43 and 44, wherein a free end of one of the torsion springs 7 is mounted to the first crutch 422 of the movable support 42 that is nearest to the rear fixing support 41, and a free end of the other torsion spring 7' is mounted to the second crutch 423 of the movable support 42 that is nearest to the rear fixing support 41, so as to twist the torsion springs and simultaneously generate a restoring force exerted on each movable support 42 when each movable support 42 rotates toward the rear fixing support 41 at the same time to form a passageway for vehicles.

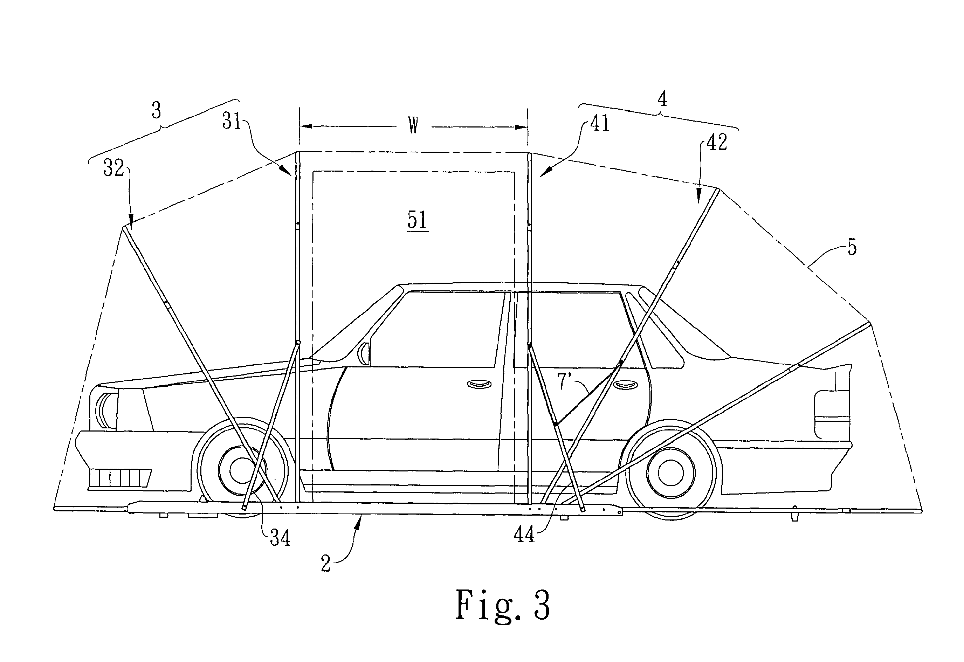

The canopy 5 is formed of waterproof woven fabric and placed on the front frame assembly 3 and the rear frame assembly 4. The canopy 5 is provided with a side door 51 corresponding to the horizontal distance W at one side. By adjusting the position of the tie beam 23 in advance to make the position of a front door of an automobile correspond to the horizontal distance W and the side door 51 accurately after parking the automobile in the canopy 5 (as shown in FIG. 3), the front door of the automobile swings outwardly through the horizontal distance W and the side door 51, such that a driver can easily get in and get out of the automobile. In use, the canopy 5 may be disposed with another side door 51 on the other side of the canopy 5 for passengers next to the driver to get in and get out of the automobile.

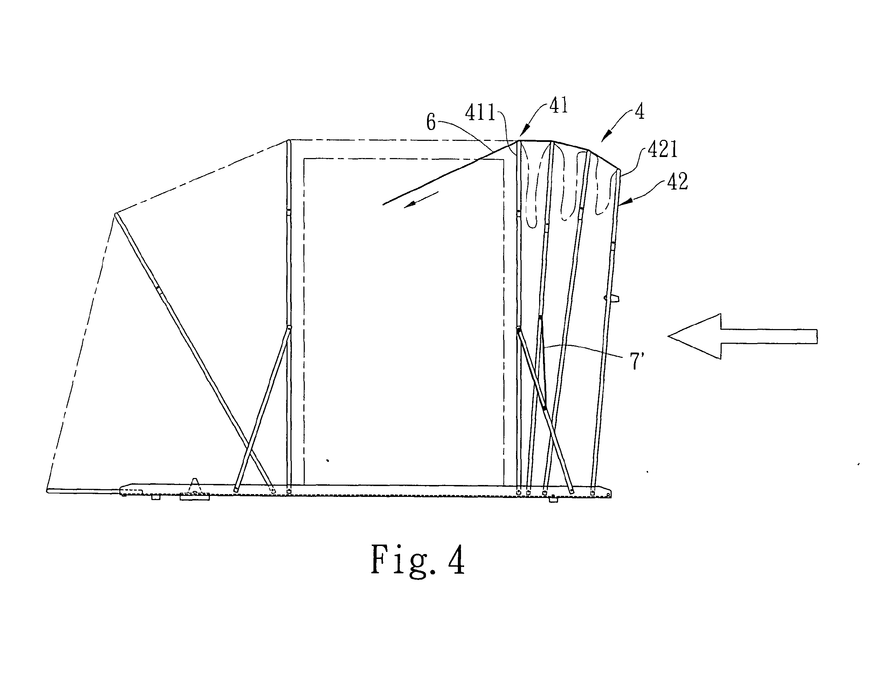

A further discussion of the manner of usage and operation of the three movable supports 42 is depicted in the FIG. 4, wherein the present invention is further disposed with a string 6 having one end connected to the crossbar 421 of a movable support 42 capable of lying down on the ground and the other end being disposed across other two crossbars, the crossbar 421 of the movable support 42 and the rear crossbar 411 of the rear fixing support 41. When pulling string 6, each movable support 42 thereby rotates forward and toward the front fixing assembly 31 direction simultaneously, so as to form a passageway for parking the automobile.

Therefore, the present invention has the following advantages:

1. The present invention enables drivers to easily and conveniently open the door of an automobile outside or inside the mobile garage.

2. The present invention is cost saving by reducing construction materials and shorten the span of the garage frames.

3. The present invention can precisely position the automobile inside the mobile garage by adjusting the adjustable transverse tie beam, and fix the parking position to make the door of the automobile accurately swing outwardly through the horizontal distance, suitable for various vehicle sizes.

4. The movable supports of the present invention are easily operated by a string capable of simultaneously pulling each movable support and effectively protect automobile surface from the friction caused by the canopy.

As stated in the above disclosed, the present invention can surely achieve its expected objects to provide a mobile garage having a side door with sufficient structure strength and low material cost for people to easily get in and get out of the automobile and further reduce the space occupied by the mobile garage.

It should be understood that different modifications and variations could be made from the disclosures of the present invention by the people familiar in the art without departing the spirit of the present invention.

## Claims

1. A mobile garage having a side door, comprising:
a base;
a front frame assembly connected to a front end of the base;
a rear frame assembly connected to a rear end of the base for providing an automobile passageway, wherein a horizontal distance is formed between a rear end of the front frame assembly and a front end of the rear frame assembly; and
a canopy carried on the front frame assembly and the rear frame assembly, the canopy having a side door corresponding to the horizontal distance at one side of the canopy for an opening door of an automobile to swing outwardly through the horizontal distance and the side door when the automobile is driven into the mobile garage.

2. The mobile garage having a side door according to claim 1, wherein the base comprises a first side plate and a second side plate being disposed parallel to the first side plate, and the rear frame assembly comprises a rear fixing support and a plurality of movable supports, the rear fixing support having a rear crossbar, a left rear crutch and a right rear crutch connected to one end of the rear crossbar respectively in which bottom ends of the left rear crutch and the right rear crutch are mounted to the first side plate and the second side plate respectively, each movable support having a crossbar, a first crutch and a second crutch connected to one end of the crossbar respectively in which bottom ends of the first crutch and the second crutch are rotatably mounted to the first side plate and the second side plate respectively.

3. The mobile garage having a side door according to claim 2, wherein the base further comprises a tie beam having two parking curbs, both ends of the tie beam adjustably connected to the first side plate and the second side plate respectively for fixing the parking position when moving the tie beam forwardly or backwardly to make a door of an automobile swing outwardly through the horizontal distance.

4. The mobile garage having a side door according to claim 2, further comprises a string having one end connected to the crossbar of a movable support, the string being disposed across the crossbars of other movable supports to simultaneously pull each movable support.

5. The mobile garage having a side door according to claim 2, further comprises two rear support crutches with top ends connected to the left rear crutch and the right rear crutch of the rear fixing support respectively, wherein bottom ends of the rear support crutches are mounted to the first side plate and the second side plate respectively.

6. The mobile garage having a side door according to claim 5, further comprises two torsion springs mounted to the two rear support crutches, wherein a free end of one of the torsion springs is mounted to the first crutch of the movable support that is nearest to the rear fixing support, and a free end of the other torsion spring is mounted to the second crutch of the movable support that is nearest to the rear fixing support.

7. The mobile garage having a side door according to claim 1, wherein the front frame assembly comprises a front fixing support, the front fixing support having a front crossbar, a left front crutch and a right front crutch connected to one end of the front crossbar respectively in which bottom ends of the left front crutch and the right front crutch are mounted to the first side plate and the second side plate respectively.

8. The mobile garage having a side door according to claim 7, further comprises a front support crutch with a top end connected to the front fixing support and a rear support crutch with a top end connected to the rear fixing support in which bottom ends of the front support crutch and the rear support crutch are mounted to the first side plate and the second side plate respectively to fix the front fixing support and the rear fixing support respectively.

9. The mobile garage having a side door according to claim 2, wherein the front frame assembly comprises a front fixing support, the front fixing support having a front crossbar, a left front crutch and a right front crutch connected to one end of the front crossbar respectively in which bottom ends of the left front crutch and the right front crutch are mounted to the first side plate and the second side plate respectively.

10. The mobile garage having a side door according to claim 9, further comprises a front support crutch with a top end connected to the front fixing support and a rear support crutch with a top end connected to the rear fixing support in which bottom ends of the front support crutch and the rear support crutch are mounted to the first side plate and the second side plate respectively to fix the front fixing support and the rear fixing support respectively.
